# EUROPEAN PATENT SPECIFICATION

(11) **EP 2 669 781 B1**
(45) Date of publication and mention of the grant of the patent: **17.08.2016**
(21) Application number: 12170087.6
(22) Date of filing: 30.05.2012
(51) Int. Cl.: G06F 3/048

(54) **A user interface for navigating in a three-dimensional environment**
Benutzerschnittstelle zur Navigation in einer dreidimensionalen Umgebung
Interface utilisateur de navigation dans un environnement tridimensionnel

(43) Date of publication of application: 04.12.2013
(73) Proprietor: Dassault Systèmes, 78140 Vélizy-Villacoublay (FR)
(72) Inventor: Queric, Mikael Alan Govrian, 75020 Paris (FR)
(74) Representative: Brunelli, Gérald

(56) References cited:
- US-A1- 2005 028 111
- US-A1- 2008 238 916
- EISENBERG M ET AL: "Creating polyhedra models by computer", JOURNAL OF COMPUTERS IN MATHEMATICS AND SCIENCE TEACHING, EDUCATION, CHARLOTTESVILLE, 1 January 1997 (1997-01-01), pages 1-33, XP002385477, ISSN: 0731-9258

## Description

The invention relates to the field of computers programs and systems, and more specifically to the field of man-machine interaction.

The invention can be used in any interactive software or system in which navigating in a three-dimensional environment is required. In particular, the invention may be used in a Computer-Aided Design software or system, or in a video game.

In this specification the expression "isometric projection" refers to a representation of three dimensional objects in which the angles between the projection of the axes are equal. In other words, the angle between two coordinates axes is equal to 120°.

The expression "orthographic projection" refers to a way of drawing a three dimensional object in two dimension from different directions so that one can see all the important sides, each important side being called "orthographic view". Orthographic projection is useful especially for example when the design of an assembly of objects has been developed to a stage whereby it is almost ready to manufacture.

Screens are commonly used in many systems to display by software a scene. A scene refers to a three-dimensional representation. It can be for example a landscape, a three-dimensional object and/or an assembly of three-dimensional objects. A user may transmit one or several input signals in order to interact with the represented objects via an hardware peripheral such as a mouse or a keyboard. Alternatively, a touch screen may be used in order to avoid the use of an hardware peripheral. Therefore, the user interface allowing the user to interact with the system may be composed by both hardware and software parts. A user interface is considered efficient if it improves the interactions between the users and the machines.

In a system in which navigating in a three-dimensional environment is required, the process of choosing how the scene is displayed is crucial. For that purpose, it is possible to select the position of an orthographic camera in the scene, which is equivalent to select a predefined orthographic view. For that purpose, the user interface should provide an easy-to-use mechanism allowing a fast selection of the scene to be displayed.

An existing solution is to display on the screen a six-sided box having the shape of a cube. This box is then used as a three-dimensional navigation tool.

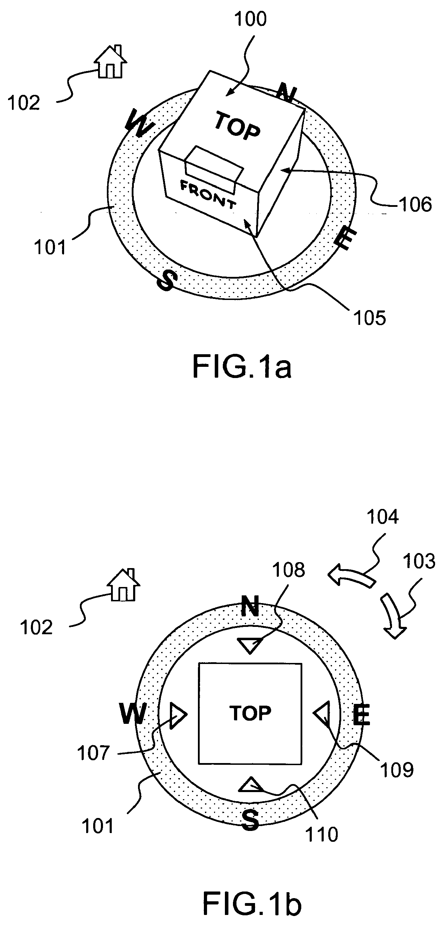

Figure 1a and figure 1b give a first example of an existing three-dimensional navigation tool having the shape of a cube. The AutoCAD (trademark) software provides a six-sided box called ViewCube. Once the ViewCube is displayed, it appears on a given screen location superimposed over the displayed scene. While the ViewCube is inactive, its primary function is to show the orientation of the scene. A compass 101 is displayed together with the ViewCube in order to improve the user's perception of how the view is oriented.

In order to change the displayed view, a cursor can be used. This cursor can be controlled by a mouse for example. When the cursor is positioned over the ViewCube, it becomes active.

A way to change the current view of the scene is to click on a predefined area of the ViewCube. For example, if the user clicks on the top side 100, a preset view associated to the top side of the cube will be displayed, the preset view being an orthographic view of the scene. Additionally, the ViewCube will be displayed in such a way that it shows the orientation of the scene after this change. As illustrated on figure 1b, after clicking on the top side of the cube, only the top side is showed.

Alternatively, the displayed view can also be changed by dragging the ViewCube with the cursor.

Another way to change the displayed view is to rotate the current view 103, 104, to select a default view 102 or an adjacent side of the cube 107, 108, 109, 110 by using computer icons displayed near the six-sided cube.

A serious drawback of this three-dimensional navigation tool is that several views of the scene are not easily selectable by the user. In particular, views that are associated to the hidden sides of the cube are not directly selectable. As showed on figure 1a, at most three sides 100, 105, 106 of the ViewCube are visible and selectable by the user. The other sides are hidden and thus are not selectable directly.

For the hidden faces to be selectable and starting from figure 1a, the ViewCube needs to be dragged. The dragging process implies moving the cursor onto the cube, dragging the cube while pressing on the left button of the mouse and releasing the left button. This process may need to be repeated twice for the hidden sides of the cube to be visible.

In many application, the user has to change the current view very frequently. Thus, the number of the user's movements needs to be reduced in order to allow a fast and efficient change of view as well as to avoid tendinitis.

Additionally, the perception of the user of what is displayed is not optimal. The use of a compass 101 supposes that the user can associate unambiguously the cardinal directions with the orientation of the scene which is not always the case.

Moreover, as presented on figure 1a and 1b, a label can be displayed on each side of the ViewCube. However, depending of the ViewCube position, the labels may be unreadable.

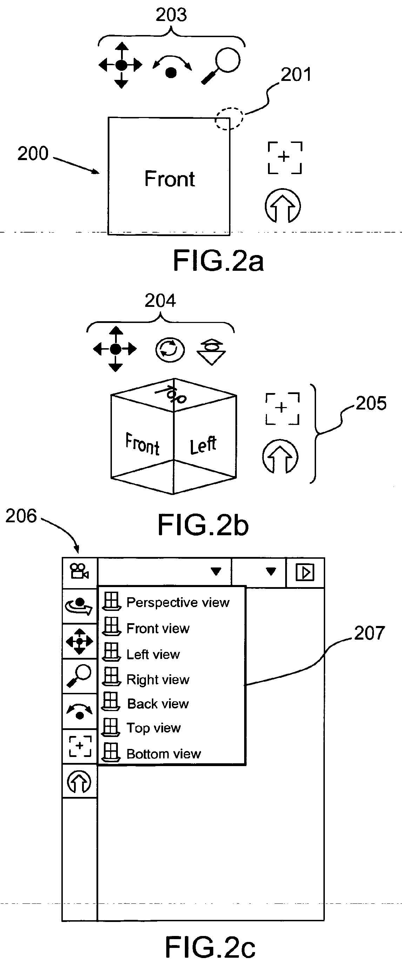

Figures 2a, 2b and 2c provide a second example of an existing three-dimensional navigation tool having the shape of a cube.

This six-sided box is provided with the DAZ Poser Studio (trademark) software and is called camera cube. As for the ViewCube, the camera cube is used to ease the process of positioning and moving a camera through a scene and thus controlling how the scene is displayed on the computer's screen.

In order to access the different views, one must click on their names. A highlighted square will appear in the center of the cube highlighting the name of the view that will be selected by clicking on it. The views are Front, Left, Back, Right, Top, and Bottom. In order to turn the cube it is possible to click on the bar along a chosen side. As illustrated on figure 2b, it is also possible to have a cube where three sides are presented simultaneously. For that purpose, the user has to click on the corners of the cube. As an example, beginning from the cube illustrated on figure 2a and presented from the front, the user can click on the upper right corner 201 of the cube. Then the current view is changed as illustrated on figure 2b. It is then possible to see the Front, Top, and Left views of the scene.

Icons 203, 204, 205, which allowing to refine the camera's position, are located around the camera cube. Those icons are also accessible at the edge of the screen 206 at a location called Camera Control plane as illustrated on figure 2c. It is also possible to access directly the preset views including the views associated to the sides of the cube via a dropdown menu 207.

Displaying a hidden side of the cube is not straightforward for the user. Beginning from figure 2a, if the user wants to get to the back side of the cube, he has to click two times on a cube edge. Additionally, the perception of the orientation can be hazardous for the user as its only landmark is a notation presented on each side of the cube.

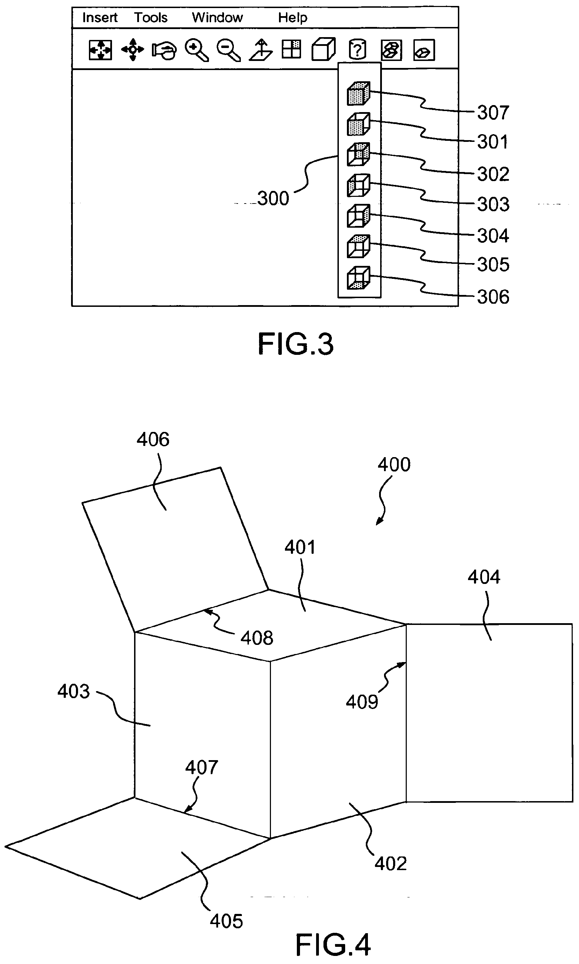

Figure 3 illustrates a third example of a 3D navigation tool. It represents the orthographic view selector of the program CATIA (trademark) provided by Dassault Systèmes. A dropdown menu comprises seven representations of a six-sided box having the shape of a cube. A first box 307 allows the user to display a default preset view. The other boxes 301, 302, 303, 304, 305, 306 are displayed with an highlighted side. When one of these boxes is selected, the orthographic view associated to the highlighted side is displayed. As for the aforementioned graphical tools, the perception of the orientation of the scene can be improved. Additionally, the process for displaying a given orthographic view is not straightforward. Indeed, the user needs to first display the dropdown menu 300 and then to select the view by clicking on a given cube representation 301, 302, 303, 304, 305, 306.

US 2005/028111 discloses a computer-implemented method for navigating into a three-dimensional scene according to the preamble of claim 1.

According to the invention, there is provided a computer-implemented method for navigating into a three-dimensional scene. The method comprises the steps of:
- displaying a graphical tool having the shape of a parallelepiped represented in isometric projection, each of its six sides being associated with an orthographic view of the scene, the three background sides being unfolded for them to be visible, the graphical tool being arranged so that all faces are accurately selectable by the user and a preview of the orthographic views being printed on the sides of the graphical tool;
- selecting one side of the graphical tool ;
- displaying the orthographic view associated to the selected side.

In a preferred embodiment, the graphical tool has the shape of a cube.

The graphical tool can be superimposed over the three-dimensional scene.

In a further aspect of the invention, each background side is unfold in a way that it keeps a connecting edge in common with one of its four neighbouring sides.

In a preferred embodiment, the connecting edges of the three background sides do not meet each other.

The graphical tool can be displayed in a window and can be motionless in this window.

In preferred implementations, the preview is highlighted when the cursor reaches its associated side.

In a further aspect of the invention, the preview is rotated is order to make it more readable for the user.

The background sides can be unfolded such that their displayed areas are maximized.

According to the invention, there is also provided a computer program product, stored on a computer readable medium, for navigating into a three dimensional scene, the computer program comprising code means to take the steps of the computer implemented method described above.

According to the invention, there is also provided an apparatus for navigating into a three dimensional scene, the apparatus comprising means for implementing the steps of the computer implemented method described above.

A better understanding of the embodiments of the present invention can be obtained from the following detailed description in conjunction with the following drawings, in which :
- figure 1a and figure 1b give a first example of an existing three-dimensional navigation tool having the shape of a cube;
- figure 2a, 2b and 2c provide a second example of an existing three-dimensional navigation tool having the shape of a cube;
- figure 3 illustrates a third example of a 3D navigation tool;
- figure 4 illustrates a 3D navigation tool having the shape of a cube with three unfolded sides;
- figure 5a, 5b and 5c give an example of how the unfolded six-sided box can be used with a three-dimensional representation of a teapot.

Figure 4 illustrates a 3D navigation tool having the shape of a cube with three unfolded sides.

This 3D navigation tool improves the user's perception of a three-dimensional scene. Additionally, the process to select an orthographic view is facilitated, one orthographic view being associated to each side of the cube.

The 3D navigation tool displayed on the screen has the shape of a parallelepiped. In a preferred embodiment, the parallelepiped is a cube but any kind of parallelepiped can be used.

In this example, the cube is displayed in isometric projection. Therefore, three sides 401, 402, 403 of the cube are viewable by the user. The three other sides called background sides should be hidden by the three viewable sides, but the cube is advantageously adapted in order to make all the sides visible and accessible by the user. For that purpose, the background sides that should normally be hidden are unfolded 404, 405, 406.

Further, the background sides can be unfolded such that their displayed areas are maximized.

In a preferred embodiment, each unfolded side keeps a connecting edge 407, 408, 409 in common with one of its four neighbouring sides.

The connecting edges 407, 408, 409 can be chosen from the six edges forming an hexagon on the screen and belonging to sides 401, 402, 403. Additionally, the connecting edges can be chosen so that they do not meet each others.

In one embodiment, a preview of the orthographic views is printed on each side of the cube, a preview of a given orthographic view being printed to the side of the cube that is associated to the said orthographic view. The technical effect of this feature is to improve the user's perception of the selectable views as well as the perception of the orientation of the view that is currently displayed.

Additionally, the preview can be rotated in the plane of its associated side in order to make it more readable for the user. Thus, the preview can be displayed upside down which is equivalent to a 180° rotation. The preview can also be displayed with a 90° rotation or with any rotation angle.

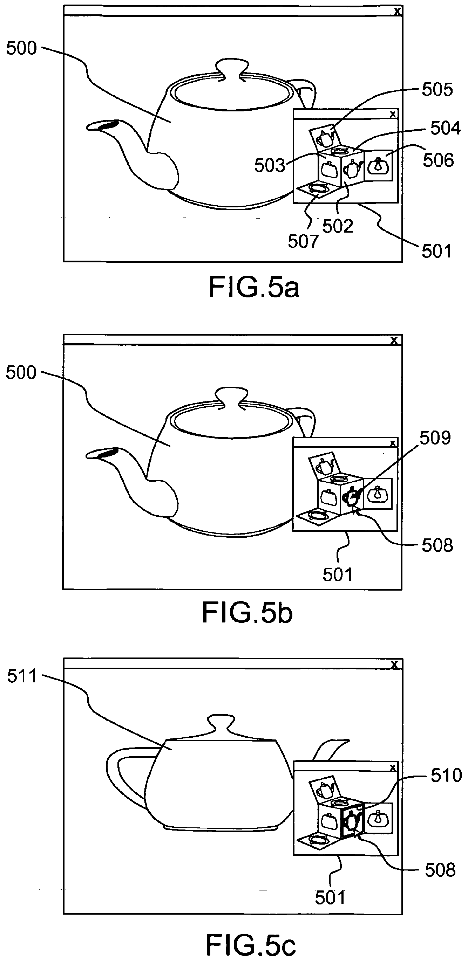

Figure 5a, 5b and 5c give an example of how the unfolded six-sided box can be used with a three-dimensional representation of a teapot.

For example, the cube can be displayed in a window 501. The cube with unfolded sides is motionless in this window, but the window itself can be moved by the user for him to find the most appropriate place on the screen.

The cube with its three sides 502, 503, 504 that are not unfolded and its three unfolded sides 505, 506, 507 is displayed so that the areas defined by each side of the cube are big enough to be easily selectable by the user. In other words, their size is sufficient for the user to place a cursor 512 onto it and to precisely select its associated view of the scene.

In this example, the preview displayed in the unfolded side 506 has been rotated with a 180° angle. Without this rotation, the teapot would have appeared with its base upward and its lid downward. The rotation improves the perception of what will be displayed if side 506 is selected.

The user can select one side of the cube by moving a cursor 508 onto it and then by clicking on it.

Advantageously, a preview of the teapot views are printed on each side of the cube.

In a preferred embodiment, the preview can be highlighted 509 when the cursor 508 reaches its associated side. In this way, the user knows that the cursor is correctly located to select this side. If this side is selected, for example by clicking on it, the corresponding orthographic view will be displayed.

On figure 5b, it is showed that the preview of the teapot belonging to the front side of the cube is highlighted 509. Then, the user selects this side by clicking on it. The orthographic view associated to this side is thus displayed 511. In a preferred embodiment, when a side is selected by the user, the said side can be even more highlighted. In other words, there are two levels of highlight. A first level of highlight is triggered when the cursor is positioned into a given side of the cube and a second level of highlight is triggered when the said side is selected. As an example, a first level of highlight can consist of emboldening the preview of the scene. A second level of highlight can consist of adding a square 510 to the selected side. The skilled person would appreciate that any other kind of highlighting technique may be used.

## Claims

1. A computer-implemented method for navigating into a three-dimensional scene, the method comprising the steps of:
- displaying a graphical tool (400) having the shape of a parallelepiped represented in isometric projection, each of its six sides (401, 402, 403, 404, 405, 406) being associated with an orthographic view of the scene, the graphical tool being arranged so that all faces are accurately selectable by the user;
- selecting one side (510, 512) of the graphical tool ; and
- displaying (511) the orthographic view associated to the selected side.
**characterized in that** the three background sides (404, 405, 406) of the six sides are unfolded for them to be visible, and **in that** a preview of the orthographic views is printed on the sides of the graphical tool.

2. The method according to claim 1, wherein the graphical tool (400) has the shape of a cube.

3. The method according to anyone of claims 1 or 2, wherein the graphical tool is superimposed over the three-dimensional scene.

4. The method according to anyone of claims 1 or 2, wherein the each background side is unfold in a way that it keeps a connecting edge (407, 408, 409) in common with one of its four neighbouring sides.

5. The method according to claim 4, wherein the connecting edges of the three background sides do not meet each other.

6. The method according to anyone of claims 1 to 5, wherein the graphical tool is displayed in a window (501) and is motionless in this window.

7. The method according to anyone of the preceding claims, wherein the preview is highlighted (509) when the cursor (508) reaches its associated side.

8. The method according to anyone of the preceding claims, wherein the preview is rotated is order to make it more readable for the user.

9. The method according to anyone of the preceding claims, wherein the background sides are unfolded (404, 405, 406) such that their displayed areas are maximized.

10. A computer program product, stored on a computer readable medium, for navigating into a three dimensional scene, the computer program comprising code means to take the steps of anyone of claims 1 to 9.

11. An apparatus for navigating into a three dimensional scene, the apparatus comprising means for implementing the steps of the method of anyone of claims 1 to 9.

## Patentansprüche

1. Computerimplementiertes Verfahren zum Navigieren in einer dreidimensionalen Szene, wobei das Verfahren die folgenden Schritte umfasst:
- Anzeigen eines Grafikwerkzeugs (400), das die Form eines Parallelepipeds hat, das in eine isometrische Projektion dargestellt ist, wobei jede seiner sechs Seiten (401, 402, 403, 404, 405, 406) einer orthogonalen Ansicht der Szene zugeordnet ist, wobei das Grafikwerkzeug so angeordnet ist, dass alle Flächen durch den Benutzer genau auswählbar sind;
- Auswählen einer Seite (510, 512) des Grafikwerkzeugs; und
- Anzeigen (511) der orthogonalen Ansicht, die der ausgewählten Seite zugeordnet ist;
**dadurch gekennzeichnet, dass** die drei Hintergrundseiten (404, 405, 406) der sechs Seiten so aufgeklappt sind, dass sie sichtbar sind, und dass eine Vorschau der orthogonalen Ansichten auf den Seiten des Grafikwerkzeugs aufgedruckt ist.

2. Verfahren nach Anspruch 1, wobei das Grafikwerkzeug (400) die Form eines Würfels hat.

3. Verfahren nach einem der Ansprüche 1 oder 2, wobei das Grafikwerkzeug die dreidimensionale Szene überlagert ist.

4. Verfahren nach einem der Ansprüche 1 oder 2, wobei jede Hintergrundseite so aufgeklappt ist, dass sie eine verbindende Kante (407, 408, 409) mit einer ihrer vier benachbarten Seiten gemeinsam hält.

5. Verfahren nach Anspruch 4, wobei die verbindenden Kanten der drei Hintergrundseiten nicht zusammentreffen.

6. Verfahren nach einem der Ansprüche 1 bis 5, wobei das Grafikwerkzeug in einem Fenster (501) angezeigt wird und in diesem Fenster unbeweglich ist.

7. Verfahren nach einem der vorhergehenden Ansprüche, wobei die Vorschau hervorgehoben wird (509), wenn der Cursor (508) die ihr zugeordnete Seite erreicht.

8. Verfahren nach einem der vorhergehenden Ansprüche, wobei die Vorschau gedreht wird, um sie für den Benutzer besser lesbar zu machen.

9. Verfahren nach einem der vorhergehenden Ansprüche, wobei die Hintergrundseiten so aufgeklappt sind (404, 405, 406), dass ihre angezeigten Flächen maximiert sind.

10. Computerprogrammprodukt, das auf einem computerlesbaren Medium gespeichert ist, zum Navigieren in einer dreidimensionalen Szene, wobei das Computerprogramm Codemittel umfasst, um die Schritte nach einem der Ansprüche 1 bis 9 durchzuführen.

11. Vorrichtung zum Navigieren in einer dreidimensionalen Szene, wobei die Vorrichtung Mittel zum Implementieren der Schritte des Verfahrens nach einem der Ansprüche 1 bis 9 umfasst.

## Revendications

1. Procédé mis en oeuvre par ordinateur pour naviguer dans une scène tridimensionnelle, le procédé comprenant les étapes ci-dessous consistant à :
- afficher un outil graphique (400) ayant la forme d'un parallélépipède représenté en perspective isométrique, chacun de ses six côtés (401, 402, 403, 404, 405, 406) étant associé à une vue orthographique de la scène, l'outil graphique étant agencé de sorte que toutes les faces sont sélectionnables de manière précise par l'utilisateur ;
- sélectionner un côté (510, 512) de l'outil graphique ; et
- afficher (511) la vue orthographique associée au côté sélectionné ;
**caractérisé en ce que** les trois côtés d'arrière-plan (404, 405, 406) des six côtés sont dépliés afin qu'ils soient visibles, et **en ce qu'**une prévisualisation des vues orthographiques est imprimée sur les côtés de l'outil graphique.

2. Procédé selon la revendication 1, dans lequel l'outil graphique (400) est de forme cubique.

3. Procédé selon l'une quelconque des revendications 1 ou 2, dans lequel l'outil graphique est superposé à la scène tridimensionnelle.

4. Procédé selon l'une quelconque des revendications 1 ou 2, dans lequel chaque côté d'arrière-plan est déplié de sorte qu'il conserve une arête de liaison (407, 408, 409) en commun avec l'un de ses quatre côtés voisins.

5. Procédé selon la revendication 4, dans lequel les arêtes de liaison des trois côtés d'arrière-plan ne se touchent pas mutuellement.

6. Procédé selon l'une quelconque des revendications 1 à 5, dans lequel l'outil graphique est affiché dans une fenêtre (501) et est immobile dans cette fenêtre.

7. Procédé selon l'une quelconque des revendications précédentes, dans lequel la prévisualisation est mise en évidence (509) lorsque le curseur (508) atteint son côté associé.

8. Procédé selon l'une quelconque des revendications précédentes, dans lequel la prévisualisation est tournée afin de la rendre plus lisible pour l'utilisateur.

9. Procédé selon l'une quelconque des revendications précédentes, dans lequel les côtés d'arrière-plan sont dépliés (404, 405, 406) de sorte que leurs aires affichées sont maximisées.

10. Produit-programme informatique, stocké sur un support lisible par ordinateur, pour naviguer dans une scène tridimensionnelle, le programme informatique comprenant un moyen de code pour mettre en oeuvre les étapes selon l'une quelconque des revendications 1 à 9.

11. Appareil pour naviguer dans une scène tridimensionnelle, l'appareil comprenant un moyen pour mettre en oeuvre les étapes du procédé selon l'une quelconque des revendications 1 à 9.
